# EUROPÄISCHE PATENTSCHRIFT

(11) **EP 2 426 473 B1**
(45) Veröffentlichungstag und Bekanntmachung des Hinweises auf die Patenterteilung: **08.05.2013**
(21) Anmeldenummer: 11179430.1
(22) Anmeldetag: 30.08.2011
(51) Int. Cl.: G01L 25/00

(54) **Betätigungsvorrichtung zum Kalibrieren von Drehmoment-Drehwinkelschlüsseln**
Actuating device for calibrating torque-rotation angle keys
Dispositif d'actionnement destiné au calibrage de clés dynamométriques à couple

(30) Priorität: 03.09.2010 DE 102010040217
(43) Veröffentlichungstag der Anmeldung: 07.03.2012
(73) Patentinhaber: Eduard Wille GmbH & Co KG, 42349 Wuppertal (DE)
(72) Erfinder: Herbold, Siegfried, 42349 Wuppertal (DE)
(74) Vertreter: Richter Werdermann Gerbaulet Hofmann

(56) Entgegenhaltungen:
- DE-A1- 19 637 067
- DE-U1-202008 002 913

## Beschreibung

Die vorliegende Erfindung betrifft eine Betätigungsvorrichtung zum Kalibrieren von Drehmomentschlüsseln mit einem ein Drehmomentmesssystem, das wenigstens eine Aufnahme zur Aufnahme des Drehmomentschlüssels, einen Drehmomentaktor zum Aufbringen eines Drehmomentes auf den Drehmomentschlüssel und einen Drehmomentmessaufnehmer zur Erfassung des Drehmomentes umfasst.

### STAND DER TECHNIK

Aus der DE 20 2006 018 352 U1 (entsprechend EP 1 927 836 A2) ist eine Betätigungsvorrichtung zum Prüfen von Drehmomentschlüsseln bekannt, mit einem Träger, zur Fixierung eines zu prüfenden Drehmomentschlüssels. An dem Träger ist ein Messwertaufnehmer angeordnet, welcher mit dem Kopfstück des zu prüfenden Drehmomentschlüssels gekoppelt wird. Mit einer auf dem Träger angeordneten Griffhalterung wird der Griff des zu prüfenden Drehmomentschlüssels fixiert. Die Betätigungsvorrichtung weist einen Auslenkmechanismus zum Erzeugen eines Drehmoments auf das Kopfstück des zu prüfenden Drehmomentschlüssels auf.

Aus der DE 20 2008 002 919 U1 (entsprechend EP 2 096 424 A2) ist eine Betätigungsvorrichtung zum Prüfen von Drehmomentschlüsseln, enthaltend einen Träger, zur Fixierung eines zu prüfenden Drehmomentschlüssels sowie einen an dem Träger angeordneten Messwertaufnehmer, welcher mit dem Kopfstück des zu prüfenden Drehmomentschlüssels gekoppelt wird, bekannt. Zudem enthält sie eine auf dem Träger angeordnete Griffhalterung zur Fixierung des Griffs des zu prüfenden Drehmomentschlüssels und einen Auslenkmechanismus zum Erzeugen eines Drehmoments auf das Kopfstück des zu prüfenden Drehmomentschlüssels.

Aus der DE 20 2008 002 913 U1 (entsprechend EP 2 096 425 A2) ist eine Betätigungsvorrichtung zum Kalibrieren von Drehmomentschlüsseln bekannt, in der ein Drehmomentmesssystem vorgesehen ist, das eine Aufnahme zur Aufnahme eines Drehmomentschlüssels, einen Drehmomentaktor zum Aufbringen eines Drehmoments auf den Drehmomentschlüssel und einen Drehmomentmessaufnehmer zur Erfassung des Drehmoments umfasst. Drehmomentschlüssel können digital ausgeführte Drehmomentsensoren aufweisen, und es sind Datenschnittstellen bekannt, um ein im Drehmomentschlüssel gemessenes Drehmoment über eine Kommunikationseinheit abzugreifen und beispielsweise zu speichern. Der Drehmomentschlüssel wird mit einem Kopfstück in die Aufnahme gesteckt, die beispielsweise als Vierkant-Aufnahme ausgeführt sein kann. Weist der Drehmomentschlüssel einen Vierkant-Wechselkopf auf, so kann dieser Wechselkopf in die Vierkant-Aufnahme gesteckt werden. Endseitig weist der Drehmomentschlüssel einen Schlüsselgriff auf, der in einer Werkzeugspannvorrichtung eingespannt werden kann. Wird über die Aufnahme ein Drehmoment in das Kopfstück des Drehmomentschlüssels eingeleitet, so wird das Drehmoment über den Schaft und den endseitigen Schlüsselgriff abgestützt, indem der Schlüsselgriff in einer Werkzeugspannvorrichtung aufgenommen wird. Die Werkzeugspannvorrichtung ist auf dem Messtisch aufgespannt, auf dem auch der Drehmomentaktor zum Aufbringen des Drehmomentes auf den Drehmomentschlüssel angeordnet ist. Im Ergebnis ergibt sich ein geschlossener Drehmomentkreis, und das Drehmoment wird vom Drehmomentaktor über die Aufnahme in das Kopfstück des Drehmomentschlüssels eingeleitet, wobei sich der Drehmomentaktor gegen den Messtisch mechanisch abstützt bzw. in diesem aufgenommen ist. Als Gegenmoment wird der Drehmomentschlüssel über den Schlüsselgriff und die Werkzeugspannvorrichtung ebenfalls über den Messtisch abgestützt. Damit entsteht ein geschlossener Drehmomentkreis, wobei über den Drehmomentmessaufnehmer eine Referenz bereitgestellt wird, so dass eine im Drehmomentschlüssel angeordnete Einrichtung zur elektronischen Messung des Drehmomentes kalibriert werden kann.

Nachteilhafterweise kann mit der bekannten Betätigungsvorrichtung zum Kalibrieren von Drehmomentschlüsseln eine Schraubverbindung, die mit einem Drehmomentschlüssel hergestellt werden kann, nicht oder nur mit großem Aufwand und mit hoher Messunsicherheit nachgebildet werden.

Es ist daher die Aufgabe der vorliegenden Erfindung, eine Betätigungsvorrichtung zum Kalibrieren von Drehmoment-Drehwinkelschlüsseln zu schaffen, mit der beliebige Schraubverbindungen nachgebildet werden können, die mit dem Drehmoment-Drehwinkelschlüssel hergestellt werden können.

Diese Aufgabe wird ausgehend von einer Betätigungsvorrichtung zum Kalibrieren von Drehmoment-Drehwinkelschlüsseln gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

### OFFENBARUNG DER ERFINDUNG

Die Erfindung schließt die technische Lehre ein, dass ein Drehwinkelmesssystem vorgesehen ist, das zur Verdrehung des Drehmomentmesssystems ausgebildet ist, derart, dass zusätzlich zur Messung eines Drehmomentes im Drehmoment-Drehwinkelschlüssel eine Verdrehung des Drehmoment-Drehwinkelschlüssels um einen Drehwinkel messbar ist.

Die Erfindung geht dabei von dem Gedanken aus, dass das Drehwinkelmesssystem das Drehmomentmesssystem als geschlossene Einheit verdreht. Bei der Einleitung der Drehbewegung in das Drehmomentmesssystem müssen keine Drehmomente überwunden werden, so dass zur Verdrehung des Drehmomentmesssystems lediglich das Rotationsmassenträgheitsmoment und ggf. die Reibung in einer Aufnahmelagerung überwunden werden muss. Durch den geschlossenen Drehmomentkreis, der wenigstens über den Drehmoment-Drehwinkelschlüssel, über die Aufnahme des Drehmoment-Drehwinkelschlüssels, über den Drehmomentmesswertaufnehmer sowie den Drehmoment erzeugenden Drehmomentaktor verläuft, wird die Drehmomentmessung durch die Aktivierung des Drehwinkelmesssystems nicht gestört und das in den Drehmoment-Drehwinkelschlüssel eingeleitete Drehmoment wird durch die Verdrehung des Drehmomentmesssystems nicht beeinflusst.

Es wird der Vorteil erreicht, dass der Drehmomentaktor und der Drehwinkelaktor unabhängig voneinander stufenlos motorisch verstellt werden können. Damit kann jeglicher Drehmoment-/Drehwinkelverlauf wiederholbar erzeugt werden. Insbesondere können festsitzende Schraubverbindungen simuliert werden und es kann die Eigenverbiegung des Drehmoment-Drehwinkelschlüssels auf einfache Weise ermittelt werden.

Mit besonderem Vorteil kann eine Rotationsachse vorgesehen sein, um die das Drehmomentmesssystem drehbar ist. Die Rotationsachse kann bei dem erfindungsgemäßen System vorteilhafterweise dabei mit der Achse zusammenfallen, um die das Drehmoment durch den Drehmomentaktor in den Drehmoment-Drehwinkelschlüssel eingebracht wird. Folglich liegt die Aufnahme zur Aufnahme des Drehmoment-Drehwinkelschlüssels in der Rotationsachse. Die Verdrehung des Drehmomentmesssystems um die Rotationsachse kann mindestens einen Vollkreis (360°) betragen und messbar sein.

Um die Verdrehung des Drehmomentmesssystems zu messen, weist dieses insbesondere einen Drehwinkelmessaufnehmer auf. Der Drehmoment-Drehwinkelschlüssel ist dabei in Bezug auf das Drehmomentmesssystem verdrehungsfrei aufgenommen. Jedoch wird der Drehmoment-Drehwinkelschlüssel durch Rotation des gesamten Drehmomentmesssystems um die Rotationsachse ebenfalls verdreht, und die Verdrehung des Drehmoment-Drehwinkelschlüssels erfolgt gleichermaßen wie bei dem Verdrehen einer Schraube oder einer Schraubenmutter. Die in den Drehmoment-Drehwinkelschlüssel eingebrachte Verdrehung wird von der Einrichtung zur elektronischen Messung des Drehwinkels im Drehmoment-Drehwinkelschlüssel gemessen, und die Einrichtung kann über die Referenz des Drehwinkelmessaufnehmers im Drehmomentmesssystem kalibriert werden. Unter Kalibrierung ist dabei die Istwert-Feststellung zu verstehen. Anschließend erfolgt dann die Nachjustierung des Drehmoment-Drehwinkelschlüssels.

Die Kalibrierung und Nachjustierung kann sogar in umgekehrter Richtung erfolgen. Der Drehmoment-Drehwinkelschlüssel kann durch einen Referenzgeber ersetzt werden, und der Drehmomentmessaufnehmer wird durch den Referenzgeber kalibriert. Ebenso kann der Drehwinkelmessaufnehmer durch einen Referenzgeber kalibriert werden, der in der Aufnahme des Drehmomentmesssystems eingespannt ist, z.B. das Betätigungssystem einmalig oder in regelmäßigen Abständen zu kalibrieren.

Das Drehwinkelmesssystem kann einen Drehwinkelaktor aufweisen, um das Drehmomentmesssystem relativ zu dem Drehwinkelmesssystem zu verdrehen. Beispielsweise kann der Drehwinkelaktor einen Servomotor umfassen, der eine Drehbewegung in das Drehmomentmesssystem einbringt. Ferner kann das Drehwinkelmesssystem einen Drehwinkelmessaufnehmer aufweisen, mit dem die Verdrehung des Drehmomentmesssystems durch das Drehwinkelmesssystem und insbesondere durch den Servomotor messbar ist. Bevorzugt kann das Drehwinkelmesssystem ruhend angeordnet sein, und das Drehmomentmesssystem führt die Drehbewegung aus. Um die Drehbewegung des Drehmomentmesssystems genau zu erfassen, ist der Drehwinkelmessaufnehmer erforderlich, der als Referenz herangezogen werden kann, um die Einrichtung zur elektronischen Messung des Drehwinkels des Drehmoment-Drehwinkelschlüssels zu kalibrieren. Im Ergebnis kann sowohl die Einrichtung zur elektronischen Messung des Drehmoments als auch die Einrichtung zur elektronischen Messung des Drehwinkels im Drehmoment-Drehwinkelschlüssel zeitgleich kalibriert werden, und es können Schraubverbindungen simuliert werden, ohne dass beispielsweise ein Reibsystem erforderlich wäre, um bei Aufbringung eines Drehmoments gleichzeitig eine Verdrehung zu erzeugen. Das über den Drehmomentaktor in den Drehmoment-Drehwinkelschlüssel eingebrachte Drehmoment und die über den Drehwinkelaktor in den Drehmoment-Drehwinkelschlüssel eingebrachte Verdrehung kann unabhängig voneinander erfolgen.

Gemäß einer vorteilhaften Ausführungsform der Betätigungsvorrichtung kann zwischen dem Drehmomentmesssystem und dem Drehwinkelmesssystem eine Kupplungsanordnung vorgesehen sein, über die das Drehmomentmesssystem mit dem Drehwinkelmesssystem in der Rotationsachse verbindbar ist. Die Kupplungsanordnung kann als feste Mitnehmerverbindung ausgeführt sein, oder die Kupplungsanordnung ist schaltbar, so dass bei Entkupplung des Drehmomentmesssystems vom Drehwinkelmesssystem das Drehmomentmesssystem frei drehbar ist. Beispielsweise kann damit die Handhabbarkeit der Betätigungsvorrichtung verbessert werden. Das Drehwinkelmesssystem kann ruhend in der Betätigungsvorrichtung angeordnet sein, so dass lediglich das Drehmomentmesssystem mit dem Drehmoment-Drehwinkelschlüssel verdreht wird.

Als besonders vorteilhafte Ausführungsform kann der Drehmomentaktor ein Hebelelement aufweisen, das über den Drehmomentmessaufnehmer und über die Aufnahme in der Rotationsachse mit dem Drehmoment-Drehwinkelschlüssel verbunden ist, wobei endseitig am Hebelelement ein Aktorelement zur Aufbringung eines Drehmomentes um die Rotationsachse angeordnet ist. Der Drehmomentaktor muss insbesondere keine Drehwinkel überwinden, da dieser im geschlossenen Drehmomentkreis des Drehmomentmesssystems eingebunden ist. Lediglich die mechanischen Nachgiebigkeiten, die sich im geschlossenen Drehmomentkreis befinden, insbesondere die Nachgiebigkeit des Drehmoment-Drehwinkelschlüssels aufgrund seiner Durchbiegung, müssen durch den Drehmomentaktor überwunden werden. Ist das Aktorelement, beispielsweise ein verfahrbarer Schlitten eines Spindelsystems, endseitig am Hebelelement angeordnet und bringt dieses in das Hebelelement ein Drehmoment ein, so kann sich der Hebelarm etwa in die gleiche Richtung erstrecken, wie auch der Schaft des Drehmoment-Drehwinkelschlüssels. Damit kann das Hebelelement auf gleiche Weise orthogonal auf die Rotationsachse zulaufen wie auch der Schaft des Drehmoment-Drehwinkelschlüssels.

Der Drehmoment-Drehwinkelschlüssel weist eine Einrichtung zur elektronischen Messung eines Drehmomentes und insbesondere eine Einrichtung zur elektronischen Messung eines Drehwinkels auf. Die Einrichtung zur elektronischen Messung des Drehmomentes kann auf Dehnungsmessstreifen beruhen, und die Einrichtung zur elektronischen Messung des Drehwinkels beruht auf Drehwinkelmesselementen, die ohne mechanische Verbindung zu ruhenden Teilen Drehwinkel messen können.

Gemäß einer weiteren Ausführungsform kann die Betätigungsvorrichtung eine Steuereinrichtung aufweisen, mit der insbesondere wenigstens die Einrichtung zur elektronischen Messung des Drehmomentes und/oder die Einrichtung zur elektronischen Messung des Drehwinkels des Drehmoment-Drehwinkelschlüssels und/oder der Drehmomentmessaufnehmer und/oder der Drehwinkelmessaufnehmer des Drehmomentsystems und/oder der Drehwinkelmessaufnehmer des Drehwinkelmesssystems elektrisch verbunden ist. Die Steuereinrichtung kann durch einen PC gebildet sein, und die mit dem PC verbundenen Komponenten weisen entsprechende Schnittstellen auf, die über Kabelverbindungen oder über Drahtlosverbindungen ausgeführt sein können, beispielsweise über Infrarot- oder Funkverbindungen.

Die Steuereinrichtung und insbesondere der PC ist zur Ansteuerung des Drehmomentaktors zur Einbringung eines Drehmomentes in den Drehmoment-Drehwinkelschlüssel bei gleichzeitiger Verdrehung des Drehmomentmesssystems zur Ansteuerung des Drehwinkelaktors ausgebildet. Es sind verschiedene Verfahren bekannt, nach denen ein Kriterium für den Grad des Festziehens einer Schraubverbindung gewonnen werden können. Die Schraubverbindung kann so lange festgezogen werden, bis ein bestimmtes, vorgegebenes Drehmoment erreicht ist. Die Schraubverbindung kann auch um einen vorgegebenen Winkel nach Überschreiten eines Fügemomentes festgezogen werden.

Das Festziehen der Schraubverbindung kann sogar bis zur Streckgrenze erfolgen, d.h. den Punkt, in dem das Ende der Hook'schen Geraden erreicht ist und eine plastische Verformung der Schraubverbindung eintritt. Dabei wird ein empirisch gefundenes Fügemoment vorgegeben. Das ist das Drehmoment, bei welchem zum Beispiel der Schraubenkopf nach Flachdrücken aller Unebenheiten glatt auf der Oberfläche des Werkstückes aufliegt. Ausgehend von diesem Punkt wird dann die Steigung der Hook'schen Geraden, d. h. die Ableitung der Dehnung der Schraube nach dem Drehwinkel, bestimmt. Wenn diese Ableitung gegenüber ihrem Maximalwert um einen bestimmten Prozentsatz absinkt, ist die Streckgrenze erreicht. Das ist ein Kriterium für das optimale Anziehen der Schraubverbindung.

Das dabei aufgebrachte Drehmoment steigt zunächst bis zu einem Maximum an, in welchem die Haftreibung überwunden wird. Dann sinkt das Drehmoment nach Überwindung der Haftreibung wieder ab. Nach Erreichen eines Maximums steigt das Drehmoment mit zunehmendem Drehwinkel wieder an. Dieses Maximum liefert das Anzugsmoment der festgezogenen Schraubverbindung. Insbesondere eine derartige Schraubverbindung kann durch die Steuereinrichtung simuliert werden.

Die Steuereinrichtung kann derartige Prozesskenntnisse von Schraubverbindungen simulieren, indem die Aktoren der Betätigungsvorrichtung entsprechend angesteuert werden. Elektronische Drehmoment-Drehwinkelschlüssel mit Drehwinkelerfassung werden insbesondere zur Kontrolle von derart festgezogenen Schraubverbindungen benutzt.

Nach einer Weiterbildung der erfindungsgemäßen Betätigungsvorrichtung kann das Drehmomentmesssystem in einer Aufnahmelagerung gelagert sein, insbesondere kann das Drehmomentmesssystem einen Messtisch aufweisen, der mittels der Aufnahmelagerung in oder auf einem Tischfuß verschwenkbar gelagert ist. Der Messtisch kann eine Arbeitsplatte und eine unterhalb der Arbeitsplatte angeordnete bewegbare Aufnahmelade aufweisen, wobei vorzugsweise auf der Arbeitsplatte eine Werkzeugspannvorrichtung angeordnet ist, in der der Drehmoment-Drehwinkelschlüssel im Bereich des Schlüsselgriffes einspannbar ist.

Im Ergebnis ergibt sich durch die erfindungsgemäße Ausführungsform der Betätigungsvorrichtung der Vorteil gegenüber dem Stand der Technik, dass auf ein Bremssystem verzichtet werden kann, das in der Regel um den Faktor 10 ungenauer und wesentlich aufwendiger zu bauen ist. Es entstehen keine Reibungsverluste, die wiederum Wärmebildung mit sich bringen und die Kalibrierung des Drehmoment-Drehwinkelschlüssels kann nicht genau erfolgen. Die Messunsicherheit der erfindungsgemäßen Betätigungsvorrichtung wird jedoch ausschließlich durch die Messunsicherheit der Messaufnehmer begrenzt.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
Fig. 1 eine schematische Darstellung eines Ausführungsbeispiels einer Betätigungsvorrichtung zum Kalibrieren von Drehmoment-Drehwinkelschlüsseln gemäß der vorliegenden Erfindung,
Fig. 2 eine perspektivische Ansicht einer Betätigungsvorrichtung mit den Merkmalen der vorliegenden Erfindung und
Fig. 3 ein abgewandeltes Ausführungsbeispiel einer Betätigungsvorrichtung gemäß der vorliegenden Erfindung.

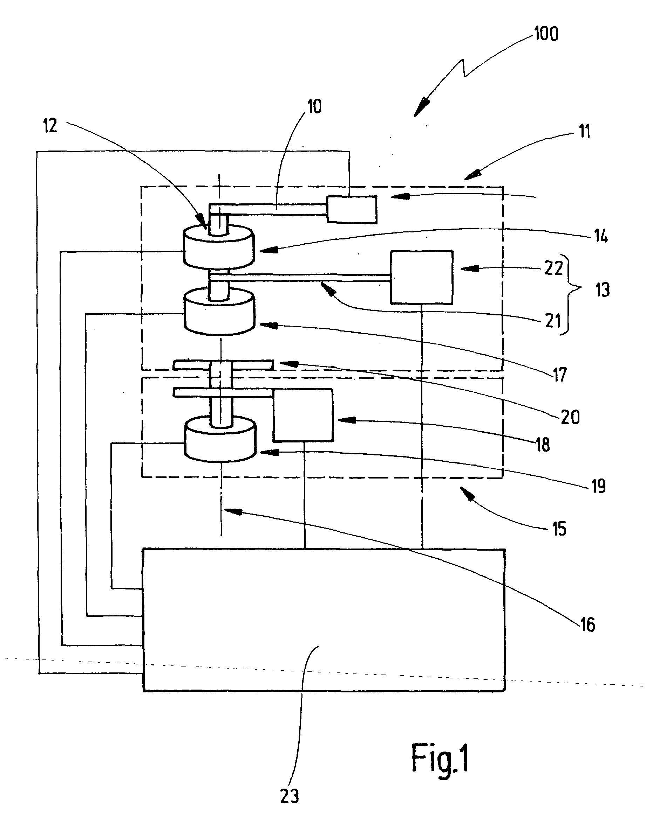

Fig. 1 zeigt in einer schematischen Ansicht ein Ausführungsbeispiel einer Betätigungsvorrichtung 100 mit den Merkmalen der vorliegenden Erfindung. Die Betätigungsvorrichtung 100 dient zum Kalibrieren von Drehmoment-Drehwinkelschlüsseln 10, die eine Einrichtung zur Messung eines Drehmomentes und eine Einrichtung zur Messung eines Drehwinkels aufweisen. Die Einrichtungen sind als elektronische Messeinrichtungen ausgebildet. Die erfindungsgemäße Betätigungsvorrichtung 100 weist zwei Baugruppen auf, und die erste Baugruppe ist durch ein Drehmomentmesssystem 11 gebildet, die durch einen oberen gestrichelten Kasten angedeutet ist. Die zweite Baugruppe ist durch ein Drehwinkelmesssystem 15 gebildet, die durch einen unteren gestrichelten Kasten angedeutet ist.

Das Drehmomentmesssystem 11 weist eine Aufnahme 12 zur Aufnahme des Drehmoment-Drehwinkelschlüssels 10 auf. Die Aufnahme 12 kann als Vierkant-Aufnahme ausgeführt sein, und der Drehmoment-Drehwinkelschlüssel 10 wird über ein Kopfstück in die Aufnahme 12 eingesteckt. Auf nicht näher gezeigte Weise wird der Drehmoment-Drehwinkelschlüssel 10 über seinen Schaft im Drehmomentmesssystem 11 ortsfest eingespannt. Das Drehmomentmesssystem 11 weist ferner einen Drehmomentaktor 13 zum Aufbringen eines Drehmomentes auf den Drehmoment-Drehwinkelschlüssel 10 auf, und der Drehmomentaktor 13 umfasst beispielhaft ein Hebelelement 21 und ein Aktorelement 22, und mit dem Drehmomentaktor 13 kann ein Drehmoment um eine Rotationsachse 16 in den Drehmoment-Drehwinkelschlüssel 10 eingebracht werden.

Die Einbringung des Drehmomentes in den Drehmoment-Drehwinkelschlüssel 10 mittels des Drehmomentaktors 13 erfolgt über einen Drehmomentmessaufnehmer 14, der zwischen dem Hebelelement 21 und der Aufnahme 12 zur Aufnahme des Drehmoment-Drehwinkelschlüssels 10 angeordnet ist. Mit dem Drehmomentmessaufnehmer 14 kann das in den Drehmoment-Drehwinkelschlüssel 10 eingebrachte Drehmoment gemessen werden und dient als Referenz zur Kalibrierung der Einrichtung zur Messung des Drehmomentes im Drehmoment-Drehwinkelschlüssel 10.

Das erfindungsgemäße Drehwinkelmesssystem 15 weist einen Drehwinkelaktor 18 auf, der über eine Kupplungsanordnung 20 mit dem Drehmomentmesssystem 11 verbunden werden kann. Der Drehwinkelaktor 18 kann das Drehmomentmesssystem 11 als gesamte Baugruppe um die Rotationsachse 16 in Drehbewegung versetzen. Der Drehwinkel, den das Drehmomentmesssystem 11 um die Rotationsachse 16 ausführt, wird mittels eines Drehwinkelmessaufnehmers 19 gemessen, der Bestandteil des Drehwinkelmesssystems 15 ist. Damit wird der Vorteil erreicht, dass der Drehmomentaktor 13 zur Aufbringung eines Drehmomentes in den Drehmoment-Drehwinkelschlüssel 10 unabhängig vom Drehwinkelaktor 18 betrieben werden kann, mit dem die gesamte Einheit des Drehmomentmesssystems 11 und folglich auch der Drehmoment-Drehwinkelschlüssel 10 verdreht werden kann.

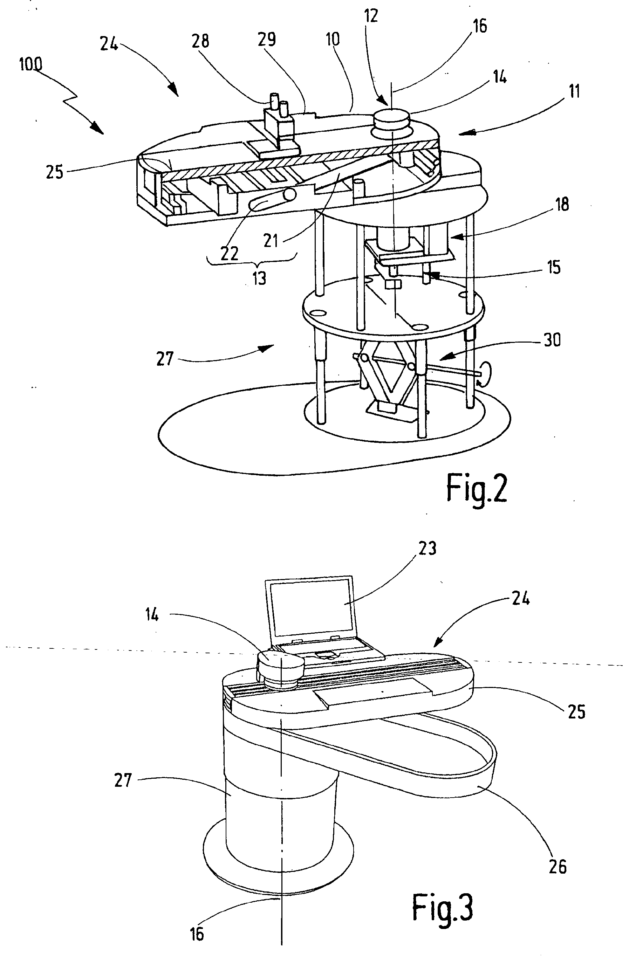

Zur Steuerung der Aktoren 13 und 18 sowie zur Auslesung der Messaufnehmer 14, 17 und 19 sowie zur Aufnahme der mit dem Drehmoment-Drehwinkelschlüssel 10 gemessenen Werte dient eine Steuereinrichtung 23. Mit der Steuereinrichtung 23 können die Aktoren 13 und 18 insbesondere derart angesteuert werden, dass nahezu jede beliebige Schraubverbindung simuliert werden kann. Ein konkreteres Ausführungsbeispiel der erfindungsgemäßen Betätigungsvorrichtung 100 zeigt Fig. 2 in einer perspektivischen Ansicht.

In Fig. 2 ist ein Ausführungsbeispiel einer Betätigungsvorrichtung 100 gezeigt, und das Drehmomentmesssystem 11 bildet einen tischförmigen Oberteil, der um die Rotationsachse 16 gegenüber einem durch einen Tischfuß 27 gebildeten Unterteil verdrehbar ist, in den das Drehwinkelmesssystem 15 eingebracht ist. Das Drehmomentmesssystem 11 besitzt einen Messtisch 24, auf dem der Drehmoment-Drehwinkelschlüssel 10 über die Aufnahme 12 und die Werkzeugspannvorrichtung 28, die den Drehmoment-Drehwinkelschlüssel 10 im Bereich des Schlüsselgriffs 29 abstützt, aufgenommen. Die Aufnahme 12 ist in einen Drehmomentmessaufnehmer 14 angeordnet, mit dem das in den Drehmoment-Drehwinkelschlüssel 10 eingebrachte Drehmoment messbar ist.

Durch die quergeschnittene Ansicht des Messtisches 24 ist der Drehmomentaktor 13 sichtbar, der ein Hebelelement 21 aufweist, das einerseits mit dem Drehmomentmessaufnehmer 14 mit der Aufnahme 12 in der Rotationsachse 16 verbunden ist und sich radial von der Rotationsachse 16 weg zu einem Aktorelement 22 hin erstreckt. Mit dem Aktorelement 22 kann ein Hebelmoment in das Hebelelement 21 eingebracht werden, indem das Hebelelement 21 in Rotationsrichtung um die Rotationsachse 16 verspannt wird. Dieses Drehmoment wird direkt übertragen in die Aufnahme 12 des Drehmoment-Drehwinkelschlüssels 10. Der Aufbau des Messtisches 24 zeigt, dass sich ein geschlossener Drehmomentkreis bildet, an dem der Messtisch 24 als Aufnahmebauteil, der Drehmomentaktor 13 als Drehmoment erzeugendes Mittel zum Aufbringen des Drehmomentes und der Drehmoment-Drehwinkelschlüssel 10 befindet. Die so gebildete Einheit des Drehmomentmesssystems 11 ist um die Rotationsachse 16 schwenkbar, und ist dafür im Tischfuß 27 drehbar gelagert.

Unterhalb der drehbaren Lagerung ist das Drehwinkelmesssystem 15 mit dem Drehwinkelaktor 18 angeordnet, der als Servomotor ausgeführt ist und eine Drehbewegung über einen Riementrieb in das Drehmomentmesssystem 11 um die Rotationsachse 16 einleiten kann. Ferner weist der Tischfuß 27 eine Höhenverstellung 30 auf, um die Arbeitshöhe des Messtisches 24 zu verstellen.

Fig. 3 zeigt ein abgewandeltes Ausführungsbeispiel der Betätigungsvorrichtung 100, in dem der Messtisch 24 als Arbeitsplatte 25 ausgebildet ist, auf der der Drehmomentmessaufnehmer 14 angeordnet ist. Unterhalb der Arbeitsplatte 25 ist eine Aufnahmelade 26 gezeigt, in der Kleinteile der Betätigungsvorrichtung 100 gelagert werden können. Sowohl der Messtisch 24 mit der Arbeitsplatte 25 als auch die Aufnahmelade 26 sind wiederum über einen Tischfuß 27 aufgenommen, und sowohl der Messtisch 24 als auch die Aufnahmelade 26 können um die Rotationsachse 16 verschwenken. Als Steuereinrichtung 23 ist beispielhaft ein PC gezeigt, mit dem sowohl die Messaufnehmer 14, 17 und 19 als auch die Aktoren 13 und 18 ausgelesen bzw. angesteuert werden können. Daten, die vom Drehmoment-Drehwinkelschlüssel 10 erfasst werden, können in der Steuereinrichtung 23 gespeichert werden.

### BEZUGSZEICHENLISTE

- 100: Betätigungsvorrichtung
- 10: Drehmoment-Drehwinkelschlüssel
- 11: Drehmomentmesssystem
- 12: Aufnahme
- 13: Drehmomentaktor
- 14: Drehmomentmessaufnehmer
- 15: Drehwinkelmesssystem
- 16: Rotationsachse
- 17: Drehwinkelmessaufnehmer
- 18: Drehwinkelaktor
- 19: Drehwinkelmessaufnehmer
- 20: Kupplungsanordnung
- 21: Hebelelement
- 22: Aktorelement
- 23: Steuereinrichtung
- 24: Messtisch
- 25: Arbeitsplatte
- 26: Aufnahmelade
- 27: Tischfuß
- 28: Werkzeugspannvorrichtung
- 29: Schlüsselgriff
- 30: Höhenverstellung

## Patentansprüche

1. Betätigungsvorrichtung (100) zum Kalibrieren von Drehmoment-Drehwinkelschlüsseln (10) aufweisend ein Drehmomentmesssystem (11), das wenigstens umfasst:
- eine Aufnahme (12) zur Aufnahme des Drehmoment-Drehwinkelschlüssels (10),
- einen Drehmomentaktor (13) zum Aufbringen eines Drehmomentes auf den Drehmoment-Drehwinkelschlüssel (10) und
- einen Drehmomentmessaufnehmer (14) zur Erfassung des Drehmomentes, **dadurch gekennzeichnet, dass** ein Drehwinkelmesssystem (15) vorgesehen ist, das zur Verdrehung des Drehmomentmesssystems (11) ausgebildet ist, derart, dass zusätzlich zur Messung eines Drehmomentes im Drehmoment-Drehwinkelschlüssel (10) eine Verdrehung des Drehmoment-Drehwinkelschlüssels (10) um einen Drehwinkel messbar ist.

2. Betätigungsvorrichtung nach Anspruch 1, **dadurch gekennzeichnet, dass** eine Rotationsachse (16) vorgesehen ist, um die das Drehmomentmesssystem (11) drehbar ist.

3. Betätigungsvorrichtung nach Anspruch 1 oder 2, **dadurch gekennzeichnet, dass** das Drehmomentmesssystem (11) einen Drehwinkelmessaufnehmer (17) aufweist, mit dem die Verdrehung des Drehmomentmesssystems (11) messbar ist, wobei vorzugsweise der Drehmoment-Drehwinkelschlüssel (10) in Bezug auf das Drehmomentmesssystem (11) verdrehungsfrei aufgenommen ist.

4. Betätigungsvorrichtung nach einem der vorgenannten Ansprüche, **dadurch gekennzeichnet, dass** das Drehwinkelmesssystem (15) einen Drehwinkelaktor (18) aufweist, um das Drehmomentmesssystem (11) relativ zum Drehwinkelmesssystem (15) zu verdrehen.

5. Betätigungsvorrichtung nach einem der vorgenannten Ansprüche, **dadurch gekennzeichnet, dass** das Drehwinkelmesssystem (15) einen Drehwinkelmessaufnehmer (19) aufweist, mit dem die Verdrehung des Drehmomentmesssystems (11) durch das Drehwinkelmesssystem (15) und insbesondere durch den Drehwinkelaktor (18) messbar ist.

6. Betätigungsvorrichtung nach einem der vorgenannten Ansprüche, **dadurch gekennzeichnet, dass** zwischen dem Drehmomentmesssystem (11) und dem Drehwinkelmesssystem (15) eine Kupplungsanordnung (20) vorgesehen ist, über die das Drehmomentmesssystem (11) mit dem Drehwinkelmesssystem (15) in der Rotationsachse (16) verbindbar ist.

7. Betätigungsvorrichtung nach einem der Ansprüche 2 bis 6, **dadurch gekennzeichnet, dass** der Drehmomentaktor (13) ein Hebelelement (21) aufweist, das über den Drehmomentmessaufnehmer (14) und über die Aufnahme (12) in der Rotationsachse (16) mit dem Drehmoment-Drehwinkelschlüssel (10) verbunden ist, wobei endseitig am Hebelelement (21) ein Aktorelement (22) zur Aufbringung eines Drehmomentes um die Rotationsachse (16) angeordnet ist.

8. Betätigungsvorrichtung nach einem der vorgenannten Ansprüche, **dadurch gekennzeichnet, dass** eine Steuereinrichtung (23) vorgesehen ist, mit der insbesondere wenigstens die Einrichtung zur elektronischen Messung des Drehmomentes und/oder die Einrichtung zur elektronischen Messung des Drehwinkels des Drehmoment-Drehwinkelschlüssels (10) und/oder der Drehmomentmessaufnehmer (14) und/oder der Drehwinkelmessaufnehmer (17) des Drehmomentmesssystems (11) und/oder der Drehwinkelmessaufnehmer (17) des Drehwinkelmesssystems (15) elektrisch verbunden ist.

9. Betätigungsvorrichtung nach einem der vorgenannten Ansprüche, **dadurch gekennzeichnet, dass** die Steuereinrichtung (23) durch Ansteuerung des Drehmomentaktors (13) zur Einbringung eines Drehmomentes in den Drehmoment-Drehwinkelschlüssel (10) bei gleichzeitiger Verdrehung des Drehmomentmesssystems (11) durch Ansteuerung des Drehwinkelaktors (18) ausgebildet ist.

10. Betätigungsvorrichtung nach einem der vorgenannten Ansprüche, **dadurch gekennzeichnet, dass** das Drehmomentmesssystem (11) in einer Aufnahmelagerung gelagert ist, insbesondere dass das Drehmomentmesssystem (11) einen Messtisch (24) aufweist, der mittels der Aufnahmelagerung in einem Tischfuß (27) verschwenkbar gelagert ist.

## Claims

1. Actuating device (100) for calibrating angle-controlled torque wrenches (10), having a torque measuring system (11), which includes at least:
- a holder (12) for receiving the angle-controlled torque wrench (10),
- a torque actuator (13) for applying a torque to the angle-controlled torque wrench (10) and
- a torque measurement sensor (14) for detecting the torque,
**characterized in that** an angular position measuring system (15) is provided which is designed for rotating the angular position measuring system (11), such that in addition to measuring a torque in the angle-controlled torque wrench (10) a rotation of the angle-controlled torque wrench (10) through an angle of rotation can be measured.

2. The actuating device according to Claim 1, **characterized in that** a rotation axis (16) is provided, about which the rotation angle measuring system (11) can be rotated.

3. The actuating device according to Claim 1 or 2, **characterized in that** the torque measuring system (11) has an angular position sensor (17) with which the rotation of the torque measuring system (11) can be measured, wherein the angle-controlled torque wrench (10) is preferably received without twisting relative to the torque measuring system (11).

4. The actuating device according to any one of the preceding claims, **characterized in that** the angular position measuring system (15) has an angular position actuator (18) in order to twist the torque measuring system (11) relative to the angular position measuring system (15).

5. The actuating device according to any one of the preceding claims, **characterized in that** the angular position measuring system (15) has an angular position sensor (19), with which the twisting of the torque measuring system (11) can be measured by the angular position measuring system (15), in particular by the angular position actuator (18).

6. The actuating device according to any one of the preceding claims, **characterized in that** between the torque measuring system (11) and the angular position measuring system (15) a clutch arrangement (20) is provided, via which the torque measuring system (11) can be connected to the angular position measuring system (15) in the axis of rotation (16).

7. The actuating device according to any one of Claims 2 to 6, **characterized in that** the torque actuator (13) has a lever element (21), which is connected via the torque measurement sensor (14) and via the holder (12) to the angle-controlled torque wrench (10) in the axis of rotation (16), wherein on the ends of the lever element (21) an actuator element (22) is arranged for applying a torque about the rotation axis (16).

8. The actuating device according to any one of the preceding claims, **characterized in that** a control device (23) is provided, to which in particular at least the device for electronically measuring the torque and/or the device for electronically measuring the angle of rotation of the angle-controlled torque wrench (10) and/or the torque measurement sensor (14) and/or the angular position sensor (17) of the torque measuring system (11) and/or the angular position sensor (17) of the angular position measuring system (15) is electrically connected.

9. The actuating device according to any one of the preceding claims, **characterized in that** the control device (23) is designed, by controlling the torque actuator (13), to apply a torque to the angle-controlled torque wrench (10) under simultaneous twisting of the torque measuring system (11) by activation of the angular position actuator (18).

10. The actuating device according to any one of the preceding claims, **characterized in that** the torque measuring system (11) is mounted in a holder mounting, in particular that the torque measuring system (11) comprises a measuring table (24) which is pivotably mounted in a table support (27) by means of the holder mounting.

## Revendications

1. Dispositif d'actionnement (100) pour le calibrage de clés dynamométriques à couple (10) présentant un système de mesure de couple (11), lequel comprend au moins :
- un évidement (12) pour recevoir la clé dynamométrique à couple (10),
- un actuateur de couple (13) pour appliquer un couple sur la clé dynamométrique à couple (10) et
- un dispositif d'acquisition de mesure de couple (14) pour relever le couple, **caractérisé en ce que** l'on prévoit un système de mesure d'angle de rotation (15), lequel est réalisé pour la torsion du système de mesure de couple (11) de manière à ce que, en plus de la mesure d'un couple dans la clé dynamométrique à couple (10), on puisse mesurer une torsion de la clé dynamométrique à couple (10) autour d'un angle de rotation.

2. Dispositif d'actionnement selon la revendication 1, **caractérisé en ce que** l'on prévoit un axe de rotation (16) autour duquel on peut faire tourner le système de mesure de couple (11).

3. Dispositif d'actionnement selon les revendications 1 ou 2, **caractérisé en ce que** le système de mesure de couple (11) présente un dispositif d'acquisition de mesure d'angle de rotation (17) avec lequel on peut mesurer la torsion du système de mesure de couple (11), moyennant quoi la clé dynamométrique à couple (10) est de préférence réceptionnée sans torsion compte tenu du système de mesure de couple (11).

4. Dispositif d'actionnement selon l'une des revendications précédentes, **caractérisé en ce que** le système de mesure d'angle de rotation (15) présente un actuateur d'angle de rotation (18), pour effectuer une torsion du système de mesure de couple (11) par rapport au système de mesure d'angle de rotation (15).

5. Dispositif d'actionnement selon l'une des revendications susmentionnées, **caractérisé en ce que** le système de mesure d'angle de rotation (15) présente un dispositif d'acquisition de mesure d'angle de rotation (19), avec lequel on peut mesurer la torsion du système de mesure de couple (11) grâce au système de mesure d'angle de rotation (15) et en particulier grâce à l'actuateur d'angle de rotation (18).

6. Dispositif d'actionnement selon l'une des revendications précédentes, **caractérisé en ce que** l'on prévoit un agencement de couplage (20) entre le système de mesure de couple (11) et le système de mesure d'angle de rotation (15), par l'intermédiaire duquel il est possible de relier le système de mesure de couple (11) avec le système de mesure d'angle de rotation (15) dans l'axe de rotation (16).

7. Dispositif d'actionnement selon l'une des revendications 2 à 6, **caractérisé en ce que** l'actuateur de couple (13) présente un élément de levier (21), lequel est en liaison via le dispositif d'acquisition de mesure de couple (14) et via l'évidement (12) dans l'axe de rotation (16) avec la clé dynamométrique à couple (10), un élément d'actuateur (22) pour appliquer un couple autour de l'axe de rotation (16) étant disposé du côté d'extrémité sur l'élément de levier (21).

8. Dispositif d'actionnement selon l'une des revendications susmentionnées, **caractérisé en ce que** l'on prévoit un dispositif de commande (23) qui est en particulier en liaison électrique au moins avec le dispositif pour la mesure électronique du couple et/ou le dispositif pour la mesure électronique de l'angle de rotation de la clé dynamométrique à couple (10) et/ou le dispositif d'acquisition de mesure de couple (14) et/ou le dispositif d'acquisition de mesure d'angle de rotation (17) du système de mesure de couple (11) et/ou le dispositif d'acquisition de mesure d'angle de rotation (17) du système de mesure d'angle de rotation (15).

9. Dispositif d'actionnement selon l'une des revendications précédentes, **caractérisé en ce que** le dispositif de commande (23) est réalisé, grâce à la commande de l'actuateur de couple (13), pour appliquer un couple dans la clé dynamométrique à couple (10) avec une torsion simultanée du système de mesure de couple (11) grâce à une commande de l'actuateur d'angle de rotation (18).

10. Dispositif d'actionnement selon l'une des revendications précédentes, **caractérisé en ce que** le système de mesure de couple (11) est logé dans un logement de réception, en particulier **en ce que** le système de mesure de couple (11) présente une table de mesure (24), laquelle est logée de manière à pouvoir pivoter dans un pied de table (27) à l'aide du logement de réception.
